(19) **Europäisches Patentamt**
**European Patent Office**
**Office européen des brevets**

(11) **EP 2 599 602 A1**

(12) **EUROPEAN PATENT APPLICATION**

(43) Date of publication:
**05.06.2013 Bulletin 2013/23**

(51) Int Cl.:
***B27K 3/15*** (2006.01)

(21) Application number: **11191288.7**

(22) Date of filing: **30.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **C.S.M. S.a.s.**
**21052 Busto Arsizio (VA) (IT)**

(72) Inventor: **Sempio, Carlo**
**21052 BUSTO ARSIZIO (VA) (IT)**

(74) Representative: **Sama, Daniele**
**Sama Patents,**
**Via G.B. Morgagni, 2**
**20129 Milano (IT)**

(54) **Process for the treatment of woody essences**

(57) A process for improving the dimensional stability and the mechanical properties of wood, in particular hardness, scratch resistance and gloss while substantially maintaining the wood material appearance combined with an easy processability with tools and industrial machines, characterized in that the wood is subjected to the following steps:
1) drying at 60 -80°C from 1 to 12 hours,
2) vacuum application,
3) wood impregnation with polymerizable monomers selected from $C_1$-$C_8$ alkyl (meth)acrylates, styrene/acrylonitrile, vinylacetate, silane monomers having formula $(R_1ZR_2)_y Si (OR_3)_x$
and polymerization by using organic or inorganic redox catalysts, the polymerization temperature being comprised between -15 and 40°C, or between >40-80°C.
4) recovery of the wood containing the polymer.

EP 2 599 602 A1

**Description**

The present invention relates to a process for conferring to wood high mechanical properties, in particular improved dimensional stability, surface hardness, scratch resistance, compression resistance, improved gloss while substantially maintaining the wood material appearance, and furthermore easy processability with tools and industrial machines.

More specifically the invention relates to a process wherein the wood is of low quality, for example robinia pseudoacacia, willow, alder, poplar.

It is known in the prior art that wood impregnated with various materials, for example composites impregnated with polymers (the so called WPCs), are obtained by various processes by using various monomers for increasing the above mentioned mechanical properties, in particular the dimensional stability. The woods, before being used, undergo a drying step to eliminate most of the water contained therein.

It is also known that wood as such, in particular the wood of low quality, does not show high mechanical properties. In order to increase them in the art treatments are carried out with various materials for example monomers that are then polymerized. See for example USP 5,605,767 wherein wood is impregnated with 30-70% of a polymerizable material formed by hexandiol diacrylate and hexandiol dimethacrylate. The manufactured articles obtained with the process of this patent show a good indent resistance. The monomers are polymerized by using a thermally activated radical initiator. The impregnated wood is thereafter heated under pressure for a period of time sufficient to polymerize and crosslink.

These kinds of monomers have the drawback to produce brittle polymers. Another drawback is that these monomers have a high cost without leading to a high increase of the above mentioned mechanical properties and in particular a greater indent resistance.

Other methods for wood hardening, for example wood impregnation with methylmethacrylate and subsequent polymerization are known in the art, see for example in S.J. Kowalski et al. "Composite of wood and polymerized methacrylate" Composites: Part B 33 (2002) 77-86. This process however does not provide a wood material with an uniform hardness and in any case such as to have a high indent resistance. This is a particularly felt problem when wood is to be used for flooring (parquet) in houses or in industrial environments.

Other known treatments in the prior art change the natural wood appearance. This has notable drawbacks in particular when wood is used as parquet.

Wood treatment with synthetic polymers reduces considerably the defects existing in natural wood and in particular its anisotropic structure while increasing at the same time its mechanical properties. The drawback of these processes resides in that the mechanical properties conferred to wood do not lead to an isotropic structure and to a high improvement of the above mentioned properties. See in particular the above mentioned paper by S.J. Kowalski et al. It is known in the art that it is possible to obtain an improved hardness and dimensional stability of wood by using a combination of hexandiol diacrylate, hydroxyethylmethacrylate, hexamethylendiisocyanate and maleic anhydride, as reported in W.Dale Hellis et al. "Wood polymer composites made with acrylic monomers, isocyanate and maleic anhydride", J. of Applied Polymer Science, vol. 73, 2499-2505 (1999). Compared with the known processes of the prior art using for example phenolic resins or acrylates or acrylic or methacrylic monomers, the dimensional stability of the manufactured articles with the above indicated monomeric composition is increased only in a minimal part. The drawback of this process is that the dimensional stability is not permanent. Furthermore in order to obtain the mentioned properties it is essential to use as monomer hydroxyethylmethacrylate that is not easily available on the market and is of high cost. This is a further drawback since in the industrial field of treated wood, processes are needed which use monomers easily available on the market and with a low cost. In this paper it is reported to be known in the art that in order to increase wood dimensional stability a mixture of monomers is used wherein to the methylmethacrylate polar monomers as 2-hydroxyethyl methacrylate and glycidyl methacrylate are added.

In the paper by D. Ortigosa Stolf et al. "Wood polymer composite: physical and mechanical properties of some wood species impregnated with styrene and methymethacrylate" Materials Research,vol. 7, No 4, 611-617, 2004 it is reported that in order to improve wood properties and in particular the dimensional stability, impregnating solutions containing styrene, methylmethacrylate and benzoyl peroxide as polymerization initiator are used.

In the paper by Seong Su Kim et al. "Characteristics of wood-polymer composite for journal bearing materials" Composite Structures 86 (2008)279-984 a wood impregnation method is described using polyethylene glycol and a lubricating oil to confer water resistance, and epoxy resins to increase mechanical properties and reduce surface friction.

From the reported prior art it is drawn that in the wood technical field the need was felt to have available a process for obtaining a manufactured article of treated wood showing improved dimensional stability and improved mechanical characteristics, in particular hardness and scratch resistance, improved gloss while substantially maintaining the starting wood appearance combined with an easy processability with tools and with industrial machines.

More specifically the need was felt to have available a process easy and economical to be carried out on an industrial scale for treating wood in order to increase its hardness in a substantially uniform way.

It has been surprisingly found by the Applicant a process solving the above mentioned technical problem.

It is an object of the present invention a process for improving the dimensional stability and the mechanical properties, in particular hardness, scratch resistance and compression resistance and furthermore to confer an improved gloss while substantially maintaining the wood appearance, combined with an easy processability with tools and industrial machines,

wherein wood is subjected to the following steps:

1) drying at 60-80°C from 1 to 12 hours, preferably from 1 to 4 hours, still more preferably from 1 to 3

2) vacuum application to remove air,

3) wood impregnation with a liquid phase constituted of polymerizable monomers selected from

- $C_1$-$C_8$ alkyl (meth)acrylates,
- styrene/acrylonitrile,
- vinylacetate,
- silane monomers having formula

$$(R_1ZR_2)_ySi(OR_3)_x \qquad (I)$$

wherein x and y are integers with

x+y=4 and x ranges from 2 to 3,

$R_1$ is an hydrogen atom, a saturated or unsaturated alkyl or cycloalkyl radical from 1 to 20 carbon atoms or an alkylaryl radical or an aryl radical containing from 6 to 20 carbon atoms, optionally substituted with hydroxy, mercapto, amino, epoxy, optionally ester groups or amides of carboxylic acids,

Z represents a bond or a bivalent radical selected from -O-, -NH-, -S-, -$CH_2$- etc.,

$R_2$ represents an optionally substituted alkylene or arylene radical containing from 1 to 20 carbon atoms,

$R_3$ represents an alkyl, aryl, alkylaryl radical containing from 1 to 20 carbon atoms, preferably from 1 to 12, still more preferably from 1 to 3, optionally substituted with alkoxy, alkylamino, alkylmercapto groups wherein the alkyl group contains from 1 to 12 carbon atoms,

removal of any liquid phase remained after the impregnation step and subsequent polymerization by using organic or inorganic redox catalysts, the polymerization temperature being comprised between -15 and 40°C, or by using temperatures between >40-80°C, preferably 60-70°C.

At the end an impregnated wood manufactured article is obtained.

The amount of polymerizable monomer based on wood is in the range 20-60% by weight, preferably 30-40%.

Monomeric mixtures comprising one or more monomers of the above mentioned classes can also be used.

Alkyl (meth)acrylates can be used also in the presence of the above indicated silane monomers. In this case the amount of used silane monomer ranges from 0 to 10 parts/100 parts of monomer alkyl (meth)acrylate, preferably from 2 to 4 parts.

The drying step 1) allows a partial elimination of water contained in wood. Swelling phenomena of the material are reduced by operating in this way. Residual water is generally of the order of 10-20% by weight.

The woody subjected to this drying treatment is generally wood seasoned in the air for about six months.

In step 2) the vacuum applied generally is comprised preferably between 100-200 mm Hg absolute. In practice the vacuum is obtained by a mechanical pump.

It has been found by the Applicant that the polymerization of step 3) is almost complete. Without being bound to any theory, it is deemed that a substantially complete polymerization of the monomer is essential in order to obtain improved wood dimensional stability and mechanical properties, such as for example hardness, scratch resistance, compression resistance, indent resistance.

Step 3) is preferably carried out at a pressure comprised between 1 and 10 ata (absolute atmosphere), preferably between 2 and 3 ata.

Inorganic redox catalysts are for example the following systems: ammonium persulphate/sodium metabisulphite, potassium persulphate /sodium formaldehyde sulphoxylate, terbutylperacetate/sodium hydrosulphite.

Examples of organic redox catalysts are for example the following systems: benzoyl hydroperoxide/cumene hydroperoxide, cumene hydroperoxide/sodium metabisulphite, diisopropyl-benzene hydroperoxide/sodium formaldehyde sulphoxylate, ter-butylperacetate/ sodium bisulphite, cumene hydroperoxide/sodium formaldehyde sulphoxylate.

The amount by weight of the catalyst is in range from 1 to 10 parts with respect to one thousand parts of monomer or of the monomer mixture.

The monomer mixture styrene/acrylonitrile is polymerized with the methods known in the prior art, by using the above mentioned catalysts for the acrylic monomers.

The vinylacetate polymerization is carried out according to known methods, in particular by using the above mentioned catalysts for alkyl (meth)acrylates monomers.

According to an embodiment of the present invention $C_1$-$C_8$ alkyl (meth)acrylate monomers are used under the above indicated polymerization conditions.

The $C_1$-$C_8$ alkyl (meth)acrylate monomers that can be mentioned are methyl(meth)acrylate, ethyl(meth)acrylate, propyl(meth)-acrylate, isopropyl(meth)acrylate, butylacrylate, sec-butyl methacrylate, terbutylmethacrylate. Methylacrylate (MA) and methylmethacrylate (MMA) are preferred. Another embodiment of the invention relates to the use of styrene/acrylonitrile monomers wherein acrylonitrile is comprised from 20 to 40% parts by weight/100 parts by weight of the mixture of the two monomers. Preferably acrylonitrile is comprised from 25 to 35 parts by weight. Another embodiment of the invention relates to the use of the vinylacetate monomer.

Another embodiment of the invention relates to the use of silane monomers having formula (I) containing hydrolysable groups, wherein R1, Z, $R_2$, y, $R_3$, x are as defined above.

In the above reported formula (I) of the silane monomers when x=2 the monomers are bifunctional and linear polysiloxane polymers are obtained, when x=3 the monomers are bifunctional and crosslinked polymers are obtained. Generally it is preferred to use silane monomers of formula I) with x=2 in combination with small amounts of trifunctional silane monomers (x=3) comprised from 0 to 2%, preferably from 0.2 to 1% b.w. with respect to the bifunctional monomer to obtain polymers having a high molecular weight. Examples of suitable silanes are dimethyldimethoxysilane, dimethyldiethoxysilane, methyltriethoxysilane, methyltrimethoxysilane, vinyltriethoxysilane, gamma-methacryloxy propyltrimetoxysilane, gamma-methacryloxypropyltris(2-methoxy ethoxy)-silane, gamma-glycidoxypropyltrimethoxy silane, gamma-mercaptopropyltriethoxysilane, gamma-aminopropyl triethoxysilane, and N-beta(aminoethyl) gamma-amino-propyltrimethoxy silane.

Silane is generally used in the presence of an hydrolysis catalyst selected from the ammonium salts of organic acids having formula:

$$R_4COO \ (NR_5R_6R_7R_8)^+ \qquad (II)$$

wherein:

$R_4$ has the same meaning as $R_1$
$R_5$, $R_6$, $R_7$, $R_8$, equal to or different, have the meanings indicate for $R_1$.

As examples of hydrolysis catalysts of formula (II), isopropylammonium acetate, isopropylammonium methacrylate, ammonium oleate, ammonium stearate, ammonium methacrylate, n-propyl-ammonium methacrylate, ammonium oleate, dimethylammonium butyrate, isopropylammonium oleate, isopropylammonium benzoate, ethylammonium acrylate, can be mentioned. The catalyst can be prepared by direct addition of the organic acid to ammonia or to an amine. The reaction can be carried out separately or directly in situ.

The process object of the present invention allows to obtain in a simple, reproducible way and without using expensive monomers, manufactured articles having the combination of the above mentioned properties particularly appreciated in the wood field for ennobling low quality wood.

Inorganic or polymeric fillers can be added to the above mentioned monomers. The added amount of filler, expressed as per cent by weight with respect to that of the monomer or of the monomer mixture, ranges from 0.5 to 50%, preferably from 1 to 40% and still more preferably from 2 to 20%. Preferably the alkyl acrylates monomers MMA and MA are added with inorganic or polymeric fillers.

The styrene/acrylonitrile monomers or silanes of formula (I) preferably are added with polymeric fillers.

The fillers can have granular, spherical or fibrous needle shape.

The granulometric sizes of the filler generally range from 0.1 to 50 $\mu$m, preferably from 1 to 20 $\mu$m.

The inorganic fillers have hydrophilic surfaces characterized by the presence of polar groups, preferably hydroxylic groups. Examples of inorganic fillers that can be used are amorphous or crystalline silica (quartz, cristobalite, etc.), glass, alumina, aluminum trihydrate, calcium carbonate, mineral silicates, alumosilicates (mica, talc, wollastonite, etc.) asbestos, glass fiber, etc.

The polymers that can be used as fillers are acrylonitrile-butadiene-styrene (ABS), styrene-acrylonitrile (SAN), polyvinylchloride (PVC), polyvinylalcohol, methylmethacrylate-acrylonitrile-butadiene-styrene (MABS), methylmethacrylate homopolymers or methylmethacrylate copolymers with (meth)acrylic esters or (meth)acrylic acids, in particular methylmethacrylate/alkylacrylate copolymers, preferably ethylacrylate.

As said, the wood used in the process of the present invention is of a low quality, preferably selected for example from robinia pseudoacacia, willow, alder, poplar.

The above types of wood are considered of low quality owing to their poor dimensional stability and their unsatisfactory mechanical properties. However they have the advantage to have a great mass of wood productivity and the property to grow also in low fertilized soils, for example sand soils, marginal soils and alluvial soils, that are soils wherein it is difficult to grow trees.

It is evident that the process of the present invention is extremely important for the wood industry since it allows to ennoble low quality wood by making high quality manufactured articles.

The process of the present invention can be carried out in any reactor suitable for the production of chemical products, for example a stainless steel reactor or an iron-coated reactor, coated preferably with fluorinated polymers. The amount of polymer formed in wood can be determined with the method reported hereinunder.

A sample of wood having size 20X20X120 mm is dried in the same conditions described in step 1) of the present invention, cooled in a silica gel drier for 1 hour and then weighed. In this way the starting weight of the sample is determined. The sample is then treated according to the other steps of the process of the present invention and at the end is weighed again. The polymer amount expressed as per cent in wood is determined as follows:

$$\frac{(Final\ weight\ -\ starting\ weight)}{Starting\ weight}\ X100$$

The test is repeated on three samples and the average value is calculated.

As said, the process of the present invention allows to obtain manufactured articles constituted by a wood containing a polymer, obtained by polymerization of the monomer or monomer mixture with which wood has been impregnated, having improved dimensional stability and improved mechanical characteristics, in particular hardness, scratch resistance, compression resistance, indent resistance, furthermore improved gloss while substantially maintaining the appearance of a wood material, in combination with an easy processability with tools and with industrial machines. More specifically the process of the present invention allows to increase hardness in a substantial uniform way on the whole wood surface.

A further object of the present invention relates to manufactured articles of wood impregnated with polymers obtainable with the process of the present invention.

A further object of the present invention is the use of monomers selected from the following: $C_1$-$C_8$ alkyl (meth) acrylates, styrene/acrylonitrile, vinylacetate and silanes of formula (I), individually or in admixture, to confer to the wood by impregnation with said monomers and subsequent polymerization according to step 3) of the process of the present invention, improved dimensional stability and improved mechanical characteristics, in particular hardness, scratch resistance and compression resistance, indent resistance, furthermore improved gloss while substantially maintaining the appearance of a wood material. The treated wood according to the present invention can be used as parquet for floors, for sport devices, for making furniture, for example office furniture.

The following examples are given for illustrative purposes and not limitative purposes of the present invention.

EXAMPLES

EXAMPLE 1

A standard sample of size 20X20X120mm of robinia pseudoacacia wood seasoned for 6 months in a dry environment at room temperature was dried at 70°C for 3 hours and then vacuum treated to remove air. The vacuum has been made by a water pump (100 mm Hg absolute). At the end the sample was weighed. Then by using a pressure of 2 ata the wood has been impregnated with monomer MMA admixed with 0.2% by weight of redox catalyst diisopropyl benzene hydroperoxide/sodium formaldehyde sulphoxylate.

It is let to polymerize at 70°C for 4 hours. At the end it is cooled and weighed.

The weight difference to the starting weight corresponds to the introduced, completely polymerized monomer.

**Claims**

1. A process for improving the dimensional stability and the mechanical properties of wood, in particular hardness, scratch resistance and compression resistance, and for conferring an improved gloss while substantially maintaining the wood material appearance combined with an easy processability with tools and industrial machines, **characterized in that** the wood is subjected to the following steps:

   1) drying at 60-80°C from 1 to 12 hours,

2) vacuum application,

3) wood impregnation with a liquid phase constituted of polymerizable monomers selected from

- $C_1$-$C_8$ alkyl (meth)acrylates,
- styrene/acrylonitrile,
- vinylacetate,
- silane monomers having formula

$$(R_1ZR_2)_y Si(OR_3)_x \qquad (I)$$

wherein x and y are integers with

x+y=4 and x ranges from 2 to 3,

$R_1$ is an hydrogen atom, a saturated or unsaturated alkyl or cycloalkyl radical from 1 to 20 carbon atoms or an alkylaryl radical or an aryl radical containing from 6 to 20 carbon atoms, optionally substituted with hydroxy, mercapto, amino, epoxy, optionally ester groups or amides of carboxylic acids,

Z represents a bond or a bivalent radical selected from -O-, -NH-, -S-, -$CH_2$- etc.,

$R_2$ represents an optionally substituted alkylene or arylene radical containing from 1 to 20 carbon atoms,

$R_3$ represents an alkyl, aryl, alkylaryl radical containing from 1 to 20 carbon atoms, preferably from 1 to 12, still more preferably from 1 to 3, optionally substituted with alkoxy, alkylamino, alkylmercapto groups wherein the alkyl group contains from 1 to 12 carbon atoms,

removal of any liquid phase remained after the impregnation step and subsequent polymerization by using organic or inorganic redox catalysts, the polymerization temperature being comprised between -15 and 40°C, or between >40-80°C.

2. A process according to claim 1 wherein the amount of polymerizable monomer amount with respect to wood is in the range from 20 to 60% by weight.

3. A process according to claims 1-2 wherein monomeric mixtures comprising one or more monomers of the above mentioned classes are used.

4. A process according to claim 3 wherein the alkyl (meth)acrylates are used in the presence of the silane monomers.

5. A process according to claims 1-4 wherein in step 2) the applied vacuum is comprised between 100-200 mm Hg absolute.

6. A process according to claims 1-5 wherein in step 3) it is operated with a pressure comprised between 1 and 10 ata.

7. A process according to claims 1-6 wherein the inorganic redox catalysts are selected from the following systems: ammonium persulphate/sodium metabisulphite, potassium persulphate/sodium formaldehyde sulphoxylate, ter-butylper-acetate/sodium hydrosulphite, the organic redox catalysts are selected from the following systems: benzoyl hydroperoxide/cumene hydroperoxide, cumene hydroperoxide/sodium metabisulphite, diisopropyl-benzene hydroperoxide/sodium formaldehyde sulphoxylate, ter-butylperacetate/sodium bisulphite, cumene hydroperoxide/sodium formaldehyde sulphoxylate.

8. A process according to claims 1-7 wherein the amount by weight of the catalyst is in range from 1 to 10 parts for one thousand parts of monomer or of monomer mixture.

9. A process according to claims 1-8 wherein $C_1$-$C_8$ alkyl (meth)acrylate monomers, selected from methyl(meth)-acrylate, ethyl(meth)acrylate, propyl(meth)acrylate, isopropil(meth)acrylate, butylacrylate, sec-butyl methacrylate, terbutylmethacrylate, are used.

10. A process according to claim 9 wherein methyl(meth)acrylate is used.

11. A process according to claims 1-8 wherein styrene/acryl-onitrile monomers are used, acrylonitrile being comprised between 20 and 40% parts by weight/100 parts by weight of the mixture of the two monomers.

12. A process according to claims 1-8 wherein vinylacetate is used.

13. A process according to claims 1-8 wherein the silane monomers of formula

$$R_1ZR_2)_ySi(OR_3)_x \qquad (I)$$

wherein $R_1$, Z, $R_2$, y, $R_3$, x are as defined above, are used.

14. A process according to claims 1-13 wherein to the monomers inorganic or polymeric fillers are added in an amount, expressed as per cent by weight with respect to that of the monomer, from 0.5 to 50%.

15. A process according to claim 14 wherein the monomers are methylacrylate and methylmethacrylate and are added of inorganic or polymeric fillers.

16. A process according to claims 1-15 wherein wood is selected from robinia pseudoacacia, willow, alder, poplar.

17. Manufactured articles constituted by wood containing the polymers obtainable with the process according to claims 1-16 of the invention.

18. Use of monomers $C_1$-$C_8$ alkyl (meth)acrylates, styrene/acrylonitrile, vinylacetate and silanes of formula (I) to confer to wood by the process of claims 1-15, improved dimensional stability and improved mechanical characteristics, in particular hardness and scratch resistance, compression resistance, improved gloss while substantially maintaining the woody material appearance.

**EP 2 599 602 A1**

Europäisches Patentamt

European Patent Office

Office européen des brevets

# EUROPEAN SEARCH REPORT

Application Number

EP 11 19 1288

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 249 581 A (LONZA AG [CH]) 13 October 1971 (1971-10-13) * page 1, lines 83-86; examples 1, 4 * ----- | 1-10, 14-18 | INV. B27K3/15 |
| X | US 3 533 725 A (BRIDGEFORD DOUGLAS J) 13 October 1970 (1970-10-13) * column 6, lines 13-75; example 35 * ----- | 1-10, 14-18 | |

TECHNICAL FIELDS SEARCHED (IPC)

B27K

~~The present search report has been drawn up for all claims~~

| Place of search | Date of completion of the search | Examiner |
|---|---|---|
| Munich | 15 May 2012 | Bjola, Bogdan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 11 19 1288

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

4, 9, 10, 15(completely); 1-3, 5-8, 14, 16-18(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 11 19 1288

---

The Search Division considers that the present European patent application does not comply with the
requirements of unity of invention and relates to several inventions or groups of inventions, namely:

1. claims: 4, 9, 10, 15(completely); 1-3, 5-8, 14, 16-18(partially)

   Wood-polymer composite comprising poly alkyl (meth)acrylate
   and a manufacturing process thereof
   ---

2. claims: 11(completely); 1-3, 5-8, 14, 16-18(partially)

   Wood-polymer composite comprising poly styrene/acrylonitrile
   and a manufacturing process thereof
   ---

3. claims: 12(completely); 1-3, 5-8, 14, 16-18(partially)

   Wood-polymer composite comprising poly vinylacetate and a
   manufacturing process thereof
   ---

4. claims: 13(completely); 1-3, 5-8, 14, 16-18(partially)

   Wood-polymer composite comprising poly siloxane and a
   manufacturing process thereof
   ---

## ANNEX TO THE EUROPEAN SEARCH REPORT
## ON EUROPEAN PATENT APPLICATION NO.

EP 11 19 1288

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2012

| Patent document cited in search report | | Publication date | Patent family member(s) | | Publication date |
|---|---|---|---|---|---|
| GB 1249581 | A | 13-10-1971 | AT | 288678 B | 10-03-1971 |
| | | | CH | 489346 A | 30-04-1970 |
| | | | DE | 1910899 A1 | 25-09-1969 |
| | | | DK | 122794 B | 17-04-1972 |
| | | | GB | 1249581 A | 13-10-1971 |
| | | | SE | 352272 B | 27-12-1972 |
| US 3533725 | A | 13-10-1970 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US P5605767 A

**Non-patent literature cited in the description**

- **S.J. KOWALSKI et al.** Composite of wood and polymerized methacrylate. *Composites,* 2002, vol. 33, 77-86
- **W.DALE HELLIS et al.** Wood polymer composites made with acrylic monomers, isocyanate and maleic anhydride. *J. of Applied Polymer Science,* 1999, vol. 73, 2499-2505
- **D. ORTIGOSA STOLF et al.** Wood polymer composite: physical and mechanical properties of some wood species impregnated with styrene and methymethacrylate. *Materials Research,* 2007, vol. 7 (4), 611-617
- **SEONG SU KIM et al.** Characteristics of wood-polymer composite for journal bearing materials. *Composite Structures,* 2008, vol. 86, 279-984